# EUROPÄISCHE PATENTANMELDUNG

(11) **EP 0 521 255 A2**
(43) Veröffentlichungstag der Anmeldung: **07.01.1993**
(21) Anmeldenummer: 92106995.1
(22) Anmeldetag: 24.04.1992
(51) Int. Cl.: H01L 27/148, H04N 3/15, H04N 5/217

(54) **Photodetektoranordnung**

(30) Priorität: 02.05.1991 DE 4114272
(71) Anmelder: Licentia Patent-Verwaltungs-GmbH, D-60596 Frankfurt (DE)
(72) Erfinder: Hofmann, Karl, Dr., W-7900 Ulm (DE); Oelmaier, Reinhard, Dipl.-Ing., W-7958 Laupheim (DE)
(74) Vertreter: Amersbach, Werner, Dipl.-Ing.

(57) **Zusammenfassung**

Für eine Photodetektoranordnung wird zur Korrektur von Signalfehlern durch Inhomogenitäten vorgeschlagen, nach Maßgabe von in einer vorangegangenen Eichphase gewonnenen individuellen Referenzwerten für die einzelnen Detektorelemente während eines Integrationszyklus dem Detektorstrom einen individuell einstellbaren Kompensationsstrom zu überlagern und/oder vor einem Integrationszyklus die Integrationskondensatoren auf individuelle Startzustände zurückzusetzen.

## Beschreibung

Die Erfindung betrifft eine Photodetektoranordnung nach dem Oberbegriff des Patentanspruches 1.

Eine derartige Anordnung ist beispielsweise aus der DE 36 25 010 A1 bekannt. Die bekannte Anordnung berücksichtigt und korrigiert die bei Photodetektorarrays mit sehr vielen Detektorelementen unvermeidlichen Inhomogenitäten. Diese Inhomogenitäten, die sowohl Unterschiede im Dunkelstrom als auch in der Responsivität (Quantenwirkungsgrad) der einzelnen Detektorelemente betreffen, äußern sich durch unterschiedliche Detektorsignale bei homogener Beleuchtung des Arrays und führen zu entsprechenden Fehlersignalen beim Betrieb der Anordnung.

Unterschiede im Dunkelstrom der Detektorelemente sind unabhängig von der Beleuchtung und führen zu einem für jedes Element individuellen Offset im Detektorsignal, während Unterschiede in der Responsivität zu einem für jedes Element individuellen Gain führen. In einem Bildverarbeitungssystem, das Photodetektorarrays verwendet, müssen diese durch Inhomogenitäten verursachten Fehler korrigiert werden. Dafür bestehen prinzipiell zwei Möglichkeiten, die analoge Korrektur vor der A/D-Wandlung oder die digitale Korrektur nach der A/D-Wandlung. Die digitale Korrektur erfordert für hohe Pixelzahlen einen beträchtlichen Signalverarbeitungsaufwand. Zudem ist durch die begrenzte Dynamik der Ausleseschaltungen und durch die Inhomogenitäten die nutzbare Signaldynamik eingeschränkt und/oder die mögliche Integrationszeit reduziert.

Die aus DE 36 25 010 A1 bekannte Anordnung arbeitet nach dem Prinzip der analogen Korrektur vor dem Auslesen der Detektorsignale. Hierzu werden in einem ersten Schritt bei definierten Beleuchtungsverhältnissen die Inhomogenitäten ermittelt und daraus abgeleitete Referenzwerte für alle Elemente individuell gespeichert, z.B. als Ladungsmenge bzw. Spannung in Kondensatoren. Der zu einem Element gespeicherte Referenzwert bestimmt eine Schwelle für eine nach Abschluß eines Integrationszyklus vor dem Auslesen vorzunehmende Subtraktion eines Signalanteils (Skimming).

Aufgabe der vorliegenden Erfindung ist es, weitere Anordnungen der im Oberbegriff des Patentanspruches 1 genannten Art zur analogen Korrektur von durch Element-Inhomogenitäten verursachten Fehlern in den Detektorsignalen vor dem Auslesen anzugeben.

Die erfindungsgemäße Lösung dieser Aufgabe ist im Patentanspruch 1 beschrieben. Die Unteransprüche enthalten vorteilhafte Ausführungen und Weiterbildungen der Erfindung.

Die Erfindung sieht zwei verschiedene Korrekturweisen vor, die einzeln oder gemeinsam eingesetzt sein können.

Die Erfindung ist nachfolgend anhand von Ausführungsbeispielen unter Bezugnahme auf die Abbildungen noch eingehend veranschaulicht. Dabei zeigt:
- FIG. 1: eine erste Ausführungsform der Erfindung
- FIG. 2: eine zweite Ausführungsform der Erfindung.

Die in den beiden Abbildungen skizzierten Anordnungen zeigen jeweils eine Kopplungsschaltung K für ein einzelnes Detektorelement der Anordnung sowie eine Ausleseschaltung, die für jedes Element einzeln oder für eine Mehrzahl von Detektorelementen gemeinsam im Zeitmultiplex eingesetzt sein kann.

Die Grundstruktur der in MOS-Technologie ausgeführten Kopplungsschaltung enthält einen ersten Transistor T1, der während eines Integrationszyklus durch Anlegen eines entsprechenden Potentials an das Detektorgate DG dieses Transistors das Photodetektorelement PD mit einem Integrationskondensator CI verbindet. Über den Transistor T1 kann auch der Arbeitspunkt des Detektorelements eingestellt werden. Der Transistor T2 sperrt während des Integrationszyklus. Ein durch das Photodetektorelement fließender Detektorstrom iD bewirkt ein Aufladen (oder Entladen) des Integrationskondensators CI, dessen dem Detektorelement abgewandter Anschluß SG auf ein geeignetes Speichergatepotential gelegt ist.

Zum Auslesen der durch den Zustand des Kondensators CI gegebenen Informationen wird in bekannter Weise das Transfergate TG des Transistors T2 mit einem Transfersignal beaufschlagt und die im Integrationskondensator gespeicherte Ladung vollständig oder teilweise in eine Ausleseschaltung AS übertragen.

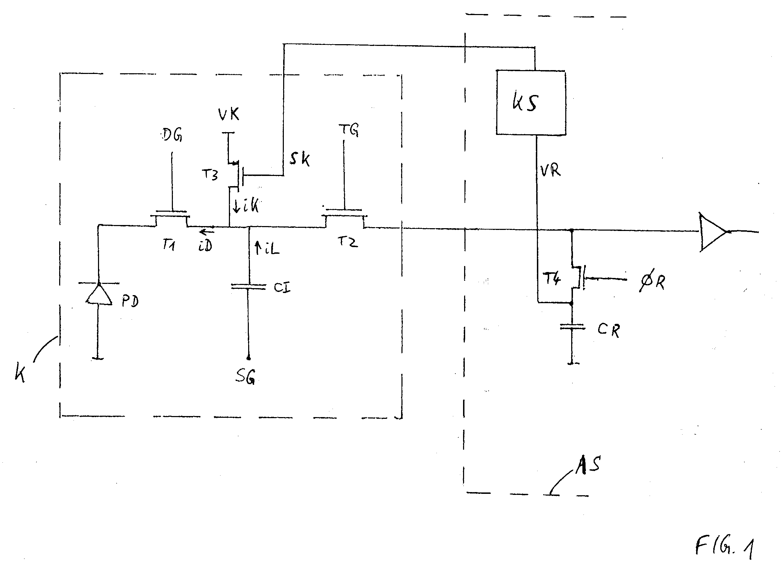

Gemäß der in FIG. 1 skizzierten Ausführungsform der Erfindung ist die Kopplungsschaltung K um einen Transistor T3 ergänzt, der während des Integrationszyklus einen Kompensationsstrom iK von einem Potential UK zu dem Integrationskondensator CI leitet. Die Höhe des Kompensationsstroms iK ist bestimmt durch ein Kompensationssteuersignal SK, das mittels einer Korrekturschaltung KS aus einem Referenzwert VR abgeleitet ist. Die Spannungsdifferenz SK-VK legt die Gate-Source-Spannung des Transistors T3 und damit die Höhe des Kompensationsstroms fest. Der Referenzwert VR ist elementspezifisch während einer vorausgegangenen Eichphase mit definierten Beleuchtungsverhältnissen gewonnen und in einem Referenzwert-Speicher abgelegt. Die analoge Speicherung des Referenzwertes VR im Speicherkondensator CR kann beispielsweise so erfolgen, daß nach einem Integrationszyklus der Eichphase beim Auslesen über das Transfergate auch der Transistor T4 durch einen Speicherimpuls ØR kurzzeitig geöffnet wird.

Die Korrekturschaltung KS bewirkt die Erzeugung eines Steuersignals SK nach Maßgabe eines vorgegebenen Referenzwerts VR mit definierter Zuordnungsanschrift zwischen VR uns SK. Da die Referenzwerte VR zu den verschiedenen Detektorelementen elementspezifisch gewonnen sind, repräsentieren sie auch die Inhomogenitäten innerhalb der Detektoranordnung und erlauben somit auch, zumindest näherungsweise, die Korrektur solcher Inhomogenitäten.

Der Kompensationsstrom iK ist vorzugsweise bezüglich der Aufladung des Integrationskondensators dem Detektorstrom iD entgegengerichtet und ermöglicht so neben dem Ausgleich von Inhomogenitäten auch noch eine Kompensation eines, keinen Informationsgehalt tragenden Gleichstromanteils und wegen dem daraus resultierenden gegenüber dem Detektorstrom iD geringeren Ladestrom iL eine Verlängerung der Integrationszeit.

Die Kompensationsstromquelle kann auch als kaskadierte Stromquelle ausgeführt sein. Gemäß einer vorteilhaften Ausführung ist die Kompensationsstromquelle ein Zweig einer Stromspiegelschaltung, deren steuernder Zweig in der Korrekturschaltung KS vorgesehen ist. Die Stromspiegelschaltung kann z.B. auch als Wilson Stromspiegel oder als kaskadierter Stromspiegel ausgeführt sein.

Die in FIG. 1 skizzierte Anordnung sieht den Speicherkondensator CR und die Korrekturschaltung KS auf dem Chip der Ausleseschaltung AS außerhalb der Kopplungsstruktur K vor und ist besonders geeignet für lineare Detektorarrays.

Für die Anwendung in 2-dimensionalen Arrays wird vorzugsweise zumindest der Referenzwertspeicher evt. auch die Korrekturschaltung in der Kopplungsstruktur K angeordnet. Kann die Korrekturschaltung aus Platzgründen nicht in der Kopplungsstruktur K untergebracht werden, so werden vorteilhafterweise die in den Kopplungsstrukturen angeordneten Referenzwertspeicher durch Einzeladressierung mittels der außerhalb des Detektorarrays angeordneten Korrekturschaltungen beim Aufnehmen der Referenzwerte auf die geeigneten Spannungen aufgeladen. Es kann auch für mehrere Detektorelemente eine gemeinsame im Zeitmultiplex genutzte Korrekturschaltung KS vorgesehen sein. In einer weiteren Ausführungsform ist zu jeder Kompensationsstromquelle ein Steuersignal-Speicherkondensator vorgesehen, der nach der Eichphase einmal oder in regelmäßigen Abständen mit dem Steuersignal SK geladen wird und vorzugsweise in der Kopplungsstruktur angeordnet ist. Als Speicherkondensator kann vorteilhafterweise die Gatekapazität des Transistors T3 selbst dienen. Dies ist besonders vorteilhaft für 2-dimensionale Detektoranordnungen mit geringer verfügbarer Fläche für die Kopplungsstrukturen.

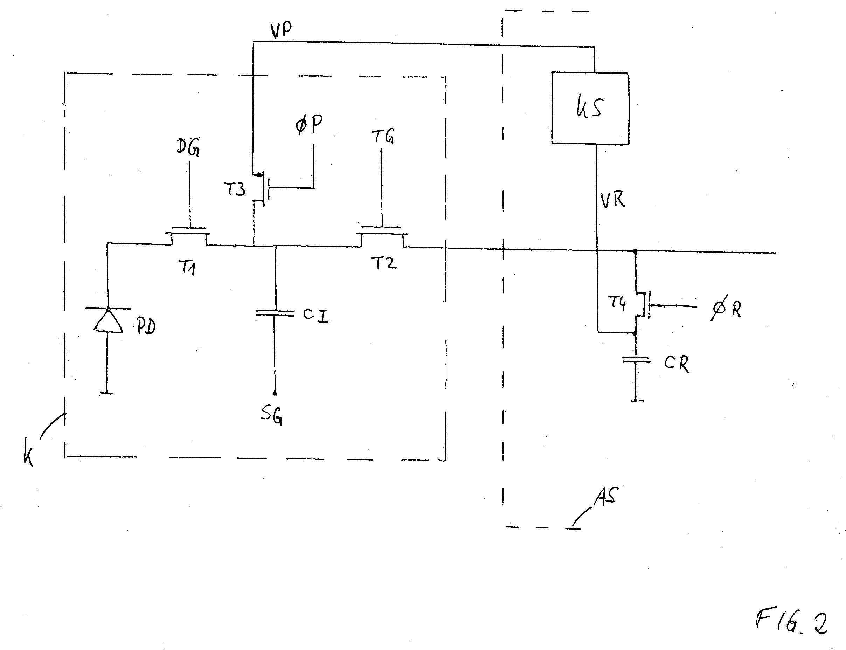

Bei der in FIG. 2 skizzierten Anordnung ist wie in FIG. 1 ein Transistor T3 vorgesehen, der in dieser Anordnung als Reset-Transistor zur Rücksetzung des Integrationskondensators C1 vor einem Integrationszyklus auf eine vorgebbares Startpotential VP dient. Das Potential VP wird durch die Korrekturschaltung KS nach Maßgabe des gespeicherten Referenzwerts VR erzeugt und die Rücksetzung des Kondensators CI erfolgt durch einen Reset-Impuls ØP am Gate des Transistors T3. Die einzelnen Potentiale VP werden in den verschiedenen Kopplungsstrukturen K mittels der Korrekturschaltungen KS so eingestellt, daß sich bei homogener Beleuchtung des Photodetektorarrays am Ende einer Integrationsperiode in allen Integrationskondensatoren die gleiche Ladung befindet bzw. dieselbe Spannung aufgebaut hat.

Gegenüber einer Anordnung mit einem Reset-Transistor zur Rücksetzung des Integrationskondensators auf konstantes Potential ist bei der in FIG. 2 skizzierten Anordnung wesentlich, daß das Potential VP individuell für jedes Detektorelement nach Maßgabe des zugehörig gespeicherten Referenzwerts vorgebbar ist. Analog zu der in FIG. 1 skizzierten Anordnung kann auch bei der Ausführungsform nach FIG. 2, insbesondere für 2-dimensionale Arrays, der Referenzwertspeicher CR und eventuell auch die Korrekturschaltung in der Kopplungsstruktur realisiert sein. Insbesondere bei einem linearen Detektorarray kann der Transistor T3 auch außerhalb der Kopplungsstruktur angeordnet und mit dem ausleseseitigen Anschluß des Transistors T2 verbunden sein. Die Rücksetzung erfolgt dann nach dem Transferzyklus bei noch geöffnetem Transistor T2 bei einem an TG angelegten Transfersignal.

Eine weitere Ausführung für 2-dimensionale Arrays verwendet ein gleichstrukturiertes Array von Kondensatoren als Referenzwertspeicher. Die Kondensatoren dieses Arrays werden bei der Referenzwertaufnahme in der Eichphase geladen, wobei jedem Kondensator CR des Arrays genau ein Pixel (Detektorelement) des Photodetektorarrays zugeordnet ist. Die Korrekturschaltung KS kann außerhalb der Kopplungsstrukturen angeordnet sein. Über Adressierschaltungen kann dafür gesorgt werden, daß beim Reset-Vorgang in einer ausgewählten Kopplungsstruktur das Potential VP zur Verfügung steht, das der Ladung bzw. Spannung des Zugeordneten Referenzwertspeichers CR entspricht.

Die beiden in FIG. 1 und FIG. 2 skizzierten prinzipiellen Schaltungsmöglichkeiten zur Korrektur von Inhomogenitäten können auch gemeinsam realisiert sein. Vorteilhafterweise kann dabei nur ein einziger Transistor T3 (oder eine äquivalente Transistorstruktur) mit entsprechend umschaltbaren Potentialen an den betroffenen Anschlüssen sowohl als Kompensationsstromquelle als auch als Reset-Schalter eingesetzt sein.

Die Speicherung der Referenzwerte kann auch digital z.B. in einer Auswerteschaltung erfolgen. Wesentlich ist die analoge Korrektur der Detektorsignale vor dem Auslesen. Hierzu werden z.B. die Referenzwerte nach Analog-Digital-Wandlung digital zwischengespeichert und daraus abgeleitete Steuersignale für die Kompensationsstromquellen bzw. Reset-Mittel zu den einzelnen Detektorelementen werden in analoger Form vorzugsweise im Zeitmultiplex den jeweiligen Kompensationsstromquellen und/oder Reset-Mitteln (Transistor T3) zugeführt. Vorteilhafterweise können dann unmittelbar bei den einzelnen Kompensationsstromquellen bzw. Reset-Transistoren analoge Speicher für die zugeführten analogen Steuersignale vorgesehen sein, so daß die Zuführung der Steuersignale zeitlich von der Korrektur der Inhomogenitäten getrennt sein kann. Insbesondere braucht bei längerer zeitlicher Speicherfähigkeit der analogen Steuersignalspeicher die Zuführung der Steuersignale nicht für jeden Integrationszyklus neu erfolgen, sondern kann in größeren Zeitabständen vorgenommen werden.

Die individuelle Signalkorrektur kann auch in einer weiteren Ausführungsform in der Weise eingesetzt sein, daß die Korrektursignale für Kompensationsstrom und/oder Reset-Potential so vorgebbar sind, daß bei einer bestimmten inhomogenen Beleuchtungsverteilung am Ende eines Integrationszyklus alle aufintegrierten Detektorsignale gleich sind. Auf diese Weise kann besonders einfach das Auftreten eines vorbekannten bestimmten Beleuchtungsmusters erkannt werden.

## Patentansprüche

1. Photodetektoranordnung mit einer Mehrzahl von Detektorelementen, deren Detektorsignale jeweils über einen vorgegebenen Integrationszyklus in einem Integrationskondensator aufintegriert werden, und mit Korrektureinrichtungen, die nach Maßgabe eines zu jedem Detektorelement individuell ermittelten Referenzwerts die Detektorsignale beeinflussen, dadurch gekennzeichnet, daß die Korrektureinrichtungen für jedes Detektorelement
a) eine Kompensationsstromquelle, welche während des Integrationszyklus dem Integrationskondensator einen Kompensationsstrom zuführt, der dem Strom durch das Detektorelement entgegengerichtet ist und dessen Betrag durch den ermittelten Referenzwert bestimmt ist, und/oder
b) Reset-Mittel zum Rücksetzen des Integrationskondensators vor einem Integrationszyklus auf einen Ausgangszustand, der durch den ermittelten Referenzwert bestimmt ist,
sowie eine oder mehrere Korrekturschaltungen (KS) zur Ableitung von Steuersignalen (SK, VP) für die Kompensationsstromquellen bzw. die Reset-Mittel aus den Referenzwerten (VR) enthalten.

2. Anordnung nach Anspruch 1, dadurch gekennzeichnet, daß die Kompensationsstromquelle Teil einer Stromspiegelschaltung ist.

3. Anordnung nach Anspruch 1 oder 2, dadurch gekennzeichnet, daß die Korrektureinrichtungen einen als Konstantstromquelle während des Integrationszyklus und/oder zur Rücksetzung des Integrationskondensators vor einem Integrationszyklus einsetzbaren Transistor enthalten.

4. Anordnung nach einem der Ansprüche 1 bis 3, dadurch gekennzeichnet, daß die Referenzwerte analog in Kondensatoren gespeichert sind.

5. Anordnung nach einem der Ansprüche 1 bis 3, dadurch gekennzeichnet, daß die Referenzwerte oder die daraus abgeleiteten Steuersignale nach Analog-Digital-Wandlung digital gespeichert sind und daß die Steuersignale in analoger Form den Kompensationsstromquellen bzw. Reset-Mitteln zuführbar sind.

6. Anordnung nach Anspruch 5, gekennzeichnet durch analoge Speicher für die den Kompensationsstromquellen bzw. Reset-Mitteln zugeführten Steuersignale.
